Europäisches Patentamt

European Patent Office

Office européen des brevets

(11) Veröffentlichungsnummer: **0 051 768**
**A1**

# (12) EUROPÄISCHE PATENTANMELDUNG

(21) Anmeldenummer: **81108642.0**

(51) Int. Cl.³: **C 09 K 3/34**

(22) Anmeldetag: **21.10.81**

(30) Priorität: **11.11.80 DE 3042517**

(43) Veröffentlichungstag der Anmeldung: **19.05.82**
**Patentblatt 82/20**

(84) Benannte Vertragsstaaten: **DE FR GB IT**

(71) Anmelder: **SIEMENS AKTIENGESELLSCHAFT Berlin und München, Postfach 22 02 61, D-8000 München 22 (DE)**

(72) Erfinder: **Bernhardt, Jörg, Dr., Annette-Kolb-Anger 3, D-8000 München (DE)**
Erfinder: **Kohlmüller, Hans, Friedrich-Bauer-Strasse 1, D-8520 Erlangen (DE)**

(54) **Flüssigkristallanzeige.**

(57) Die Erfindung betrifft eine Feldeffekt-Flüssigkristallanzeige und stellt sich die Aufgabe, eine derartige Anzeige in der Weise auszugestalten, daß ein Gleichspannungsbetrieb ermöglicht wird und eine Vereinfachung im Aufbau erreicht werden kann. Erfindungsgemäß ist dazu vorgesehen, daß die Flüssigkristalle einen Zusatz von 0,01 bis 1 Gew.-% eines nichtionogenen, oxidierbaren bzw. reduzierbaren Elektronen-Donor-Akzeptor-Komplexes aufweisen, dessen Oxidation und Reduktion in einem Potentialbereich erfolgt, der innerhalb des Potentialbereiches für die Oxidation und Reduktion des Flüssigkristalls liegt. Das erfindungsgemäße Display eignet sich insbesondere auch für Multiplexanzeigen.

SIEMENS AKTIENGESELLSCHAFT       Unser Zeichen
Berlin und München               VPA 80 P 7 5 8 0 E

0051768

## Flüssigkristallanzeige

Die Erfindung betrifft eine Feldeffekt-Flüssigkristallanzeige.

Flüssigkristallanzeigen oder -displays (LCD) sind
Anordnungen, bei denen sich zwischen zwei Elektroden,
die insbesondere aus Zinn- oder Indiumoxid bestehen,
Flüssigkristalle befinden. In derartigen Systemen,
welche elektrochemische Zellen darstellen, werden für
die elektrooptische Anzeige sowohl hydrodynamische
als auch Feldeffekte herangezogen.

Bei Flüssigkristallanzeigen, die hydrodynamische Effekte ausnutzen, beispielsweise die sogenannten dynamisch
streuenden Zellen, ist ein Stromfluß über die Zelle
erforderlich. Zur Aufrechterhaltung dieses Stromes
werden den Flüssigkristallen Leitsalze, wie Tetrabutylammoniumpikrat, zugesetzt. Dynamisch streuende Zellen
werden im allgemeinen mit Wechselstrom betrieben, es
ist aber auch ein Gleichstrombetrieb möglich.

Feldeffekt-Flüssigkristallanzeigen sind dadurch gekennzeichnet, daß bei ihnen für den Schaltvorgang kein
Stromfluß notwendig ist, d.h. die elektrooptische
Anzeige erfordert keinen Strom. Derartige Systeme, wie
TN-Zellen ("twisted nematic"), d.h. nematische Drehzellen, und Farbstoffzellen ("Guest-Host"-Zellen),
haben aber den Nachteil, daß sie nur mit Wechselspannungen angesteuert werden können, wenn das elektrische
Feld aufrechterhalten werden soll.

Bh 2 Koe / 6.11.1980

0051768

Beim Betrieb von Feldeffekt-Flüssigkristallanzeigen mit Gleichspannung oder auch mit niederfrequenter Wechselspannung treten irreversible elektrochemische Reaktionen der Flüssigkristalle auf, die die Lebensdauer der Displays begrenzen und somit die Einsatzfähigkeit von nematischen Drehzellen und Farbstoffzellen vermindern. Bei nematischen Drehzellen machen sich diese elektrochemischen Reaktionen unter anderem in einer Dimerisierung und Polymerisierung der Flüssigkristalle bemerkbar, bei Farbstoffzellen bewirken sie eine oxidative oder reduktive Zerstörung des Farbstoffes.

Zur Reduzierung der elektrochemischen Reaktionen, die von Gleichspannungsanteilen bewirkt werden, und somit zur Erhöhung der Lebensdauer der Displays ist versucht worden, den diese Reaktionen verursachenden Strom durch Erhöhung des ohmschen Widerstandes zu verringern. Dazu sind aber extrem reine Flüssigkristalle erforderlich, was zu einer spürbaren Verteuerung der Anzeigen führt. Außerdem wurde bereits versucht, die Zellen mit symmetrischem Wechselstrom anzusteuern. Dabei wird die Frequenz des Wechselstromes so hoch gewählt, daß der über die Zelle fließende Strom durch die Doppelschichtkapazität der Elektroden aufgefangen wird. Der Nachteil dieser Methode ist, daß bei der Verwendung symmetrischen Wechselstromes kompliziert aufgebaute Schaltkreise erforderlich sind.

Aufgabe der Erfindung ist es, eine Feldeffekt-Flüssigkristallanzeige derart auszugestalten, daß ein Gleichspannungsbetrieb ermöglicht wird und somit eine Vereinfachung im Aufbau des Displays erreicht werden kann.

Dies wird erfindungsgemäß dadurch erreicht, daß die
Flüssigkristalle einen Zusatz von 0,01 bis 1 Gew.-%
eines nicht-ionogenen, oxidierbaren bzw. reduzierbaren
Elektronen-Donor-Akzeptor-Komplexes aufweisen, dessen
Oxidation und Reduktion in einem Potentialbereich
erfolgt, der innerhalb des Potentialbereiches für die
Oxidation und Reduktion des Flüssigkristalls liegt.

Unter Elektronen-Donor-Akzeptor-Komplexen (oder kurz
EDA-Komplexen), die auch als "$\pi$-Komplexe" bezeichnet
werden, werden im Rahmen der vorliegenden Patentanmeldung organische Molekelkomplexe verstanden. Diese
Molekelkomplexe sind stöchiometrisch, meist im Molverhältnis 1:1, aus zwei Komponenten zusammengesetzt, von
denen jede für sich allein eine abgesättigte stabile
Verbindung ist. Derartige Molekelkomplexe werden
häufig auch als "Charge-transfer"-Komplexe bezeichnet.

Bevorzugt werden in der erfindungsgemäßen Feldeffekt-
Flüssigkristallanzeige EDA- bzw. "Charge-transfer"-
Komplexe eingesetzt, die als Chinhydrone bezeichnet
werden. Chinhydrone sind - meist tiefgefärbte -
Additionsverbindungen aus Chinonen (als Elektronen-
Akzeptor) und Hydrochinonen (als Elektronen-Donor).
Das gewöhnliche Chinhydron beispielsweise besteht
aus p-Benzochinon und Hydrochinon. Ein geeigneter
Elektronen-Akzeptor ist auch Chloranil, d.h.
Tetrachlor-p-benzochinon.

Neben Chinhydronen finden in den erfindungsgemäßen
Flüssigkristallanzeigen vor allem auch Gemische aus
aromatischen Polyaminen (Elektronen-Donoren) und
aromatischen Polynitro- oder Polynitrilverbindungen
(Elektronen-Akzeptoren), d.h. aus polyfunktionellen
Aminen und Nitroverbindungen bzw. Nitrilen, als Zusatz zu den Flüssigkristallen Verwendung. Derartige Verbindungen sind einerseits beispielsweise 1.3.5-Triaminobenzol und andererseits 1.3.5-Trinitrobenzol oder 1.3.5-Tricyanobenzol. Geeignete Elektronen-Donoren sind darüber hinaus auch aromatische Polyalkylverbindungen, wie Hexamethylbenzol. Als Elektronen-Akzeptor kommt ferner auch Pikrinsäure, d.h. 2.4.6-Trinitrophenol, in Betracht.

Der Potentialbereich für die Oxidation und Reduktion der verwendeten EDA-Komplexe liegt vorzugsweise weit innerhalb des entsprechenden Potentialbereiches der Flüssigkristalle. Diese Komplexe weisen außerdem keinen ionogenen Charakter auf und zwar deshalb, damit die niedrige Leitfähigkeit der Flüssigkristalle nicht erhöht wird.

Durch den Zusatz von EDA-Komplexen zu den Flüssigkristallen wird bei den erfindungsgemäßen Displays erreicht, daß der aus der Ansteuerspannung und dem ohmschen Widerstand resultierende Strom nicht zu einer elektrochemischen Reaktion der Flüssigkristalle, d.h. zu einer irreversiblen Umsetzung, führt. Vielmehr treten die EDA-Komplexe an die Stelle der Flüssigkristalle und unterliegen dabei einer reversiblen Reaktion. Durch den Zusatz von EDA-Komplexen kann somit die Lebensdauer von Feldeffekt-Flüssigkristallanzeigen, wie nematischen Drehzellen und Farbstoffzellen, verbessert werden. Im übrigen können dabei alle bislang verwendeten nematischen Flüssigkristalle eingesetzt werden.

Bei dynamisch streuenden Zellen, d.h. bei Displays, bei denen für die elektrooptische Anzeige ein hydrodynamischer Effekt ausgenutzt wird, ist der Zusatz von Verbindungen mit Redox-Eigenschaften bereits bekannt (vgl.:

"J. Electrochem. Soc.", Vol. 124, 1977, Seite 1389 ff.).
Bei diesen Zellen ist aber - im Gegensatz zu den auf
dem Feldeffekt beruhenden Zellen - für den Schaltvorgang ein Stromfluß erforderlich, so daß die Verhältnisse nicht vergleichbar und bestimmte Maßnahmen auch
nicht ohne weiteres übertragbar sind. Darüber hinaus
sind Zusätze zu den Flüssigkristallen an sich unerwünscht, da hierbei die Gefahr einer Verunreinigung
besteht. Aus diesem Grunde konnte auch nicht vorhergesehen werden, daß die bei der erfindungsgemäßen Flüssigkristallanzeige getroffenen Maßnahmen einen positiven
Effekt bewirken.

Neben der Verbesserung der Lebensdauer bewirken die
genannten Maßnahmen bei der erfindungsgemäßen Feld-
effekt-Flüssigkristallanzeige auch eine Verringerung
der Gleichspannungsempfindlichkeit der Zelle. Normalerweise werden die Zellen nämlich mit einer Reckteckspannung angesteuert, deren Gleichstromanteil sehr gering
sein muß. Dies wiederum stellt aber hohe Anforderungen
an die dabei verwendeten integrierten Schaltungen. Bei
den erfindungsgemäßen Anzeigen kann aber ein größerer
Gleichstromanteil toleriert werden und es können sogar
Displays für Gleichstromansteuerung (DC) aufgebaut
werden.

Eine DC-Ansteuerung hat eine hohe wirtschaftliche Bedeutung, da hiermit der Aufbau billiger und einfacher
Displays möglich ist, die keine komplizierten integrierten Schaltungen zur Ansteuerung benötigen. Eine gleichspannungsfeste Anzeige (DC-Display) stellt darüber
hinaus auch beim Betrieb mit Wechselstrom keine hohen
Anforderungen an die Symmetrie der Ansteuerspannung.
Bei den erfindungsgemäßen Flüssigkristallanzeigen
können deshalb die bisher strengen Anforderungen in
Bezug auf die Gleichspannungskomponente gelockert werden.

Ein wesentlicher Vorteil von DC-Displays liegt ferner in der Anwendung bei Multiplexanzeigen. Bei derartigen Anzeigen wird eine steile Schaltkennlinie des Flüssigkristalls gefordert, um ein Übersprechen auf Nachbarzellen zu vermeiden. Die geforderte Steilheit konnte bislang aber bei keinem Flüssigkristall in ausreichendem Maße erreicht werden. Mit den erfindungsgemäßen Anzeigen ergeben sich hierbei nun aber neue Möglichkeiten.

Ein weiterer Vorteil der erfindungsgemäßen Displays besteht darin, daß durch den Zusatz von EDA-Komplexen auch die Elektroden geschützt werden können. Die Elektroden, die im allgemeinen aus Indium- oder Zinnoxid bestehen, können nämlich ebenfalls einem elektrochemischen Angriff unterliegen und reduziert werden. Werden nun aber EDA-Komplexe eingesetzt, deren Redoxpotential innerhalb des Potentialbereiches liegt, bei welchem die Elektroden üblicherweise angegriffen werden, so ergibt sich durch den EDA-Zusatz auch ein Schutz der Elektroden.

Anhand von Beispielen und Figuren, welche die Abhängigkeit der Transmission T, d.h. der Durchlässigkeit, von der Gleichspannung $U_{DC}$ zeigen, soll die Erfindung noch näher erläutert werden.

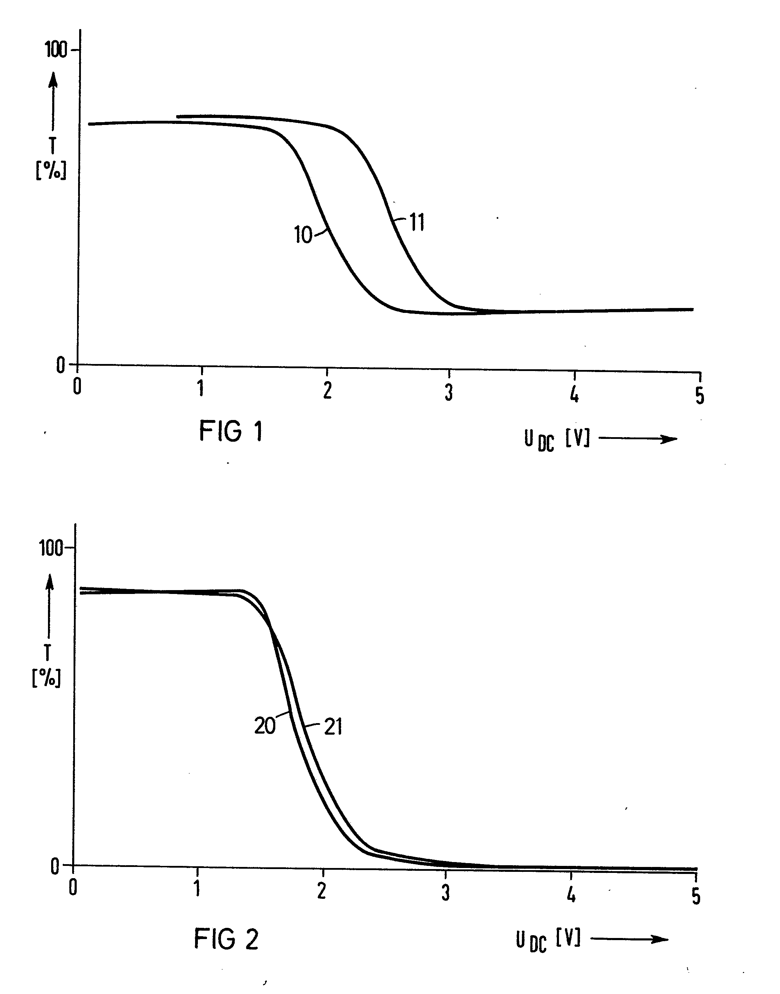

Ein Flüssigkristalldisplay mit p-Cyanophenylcyclohexan als nematischen Flüssigkristall zeigt eine instabile Kontrastkennlinie. In Fig. 1, in der Kurve 10 die ursprüngliche Kennlinie darstellt und Kurve 11 die Kennlinie nach 10minütigem Gleichstrombetrieb, ist diese Instabilität klar zu erkennen. Es zeigt sich nämlich, daß die zweite Kennlinie deutlich zu höheren Spannungen verschoben ist.

Beim Gleichstrombetrieb fließt über das Display ein Strom, der von der Leitfähigkeit des Flüssigkristalls begrenzt wird. Bei diesem Strom handelt es sich in den Elektroden um einen Elektronenstrom und im Flüssigkristall um einen Ionenstrom. Die Umwandlung der beiden Ströme erfolgt in einer Durchtrittsreaktion des Flüssigkristalls an der Grenzfläche Flüssigkristall/Elektrode. Diese Reaktion verläuft aber sehr langsam. Zum Erreichen der durch den Strom bedingten Reaktionsgeschwindigkeit ist eine hohe Überspannung erforderlich. Diese hohe Überspannung führt nun aber an den Elektroden zu einer Polarisation, die sich in einer Verschiebung der Kontrastkennlinie bemerkbar macht.

Im übrigen ist dem Ionenstrom ein Diffusionsstrom entgegengerichtet. Die Restleitfähigkeit, die durch den EDA-Zusatz beeinflußt wird, ist für das Ausschalten der Zelle erforderlich. Aus der Dielektrizitätskonstanten und dem spezifischen Widerstand des Flüssigkristalls ergibt sich dabei die Ausschaltzeit des Displays.

Wird nun dem Display ein EDA-Komplex zugesetzt, beispielsweise 0,01 bis 0,2 Gew.-% Chinhydron, bezogen auf den Flüssigkristall, so führt dies zu einer Stabilisierung der Kontrastkennlinie. In Gegenwart des EDA-Komplexes erfolgt nämlich der Ladungsdurchtritt, d.h. der Übergang des Elektronen- in den Ionenstrom, nicht mehr in der langsam ablaufenden Reaktion des Flüssigkristalls, sondern in der schnelleren Reaktion des EDA-Komplexes. Diese Reaktion erfordert aber keine hohe Überspannung. Es kommt somit zu keiner nennenswerten Polarisation und es tritt auch keine (wesentliche) Verschiebung der Kontrastkennlinie auf. Durch die geringe Polarisation wird aber auch verhindert, daß der Flüssigkristall, der nur bei hohen Überspannungen umgesetzt werden kann, elektrochemisch reagiert.

0051768

In Fig. 2 sind die Kontrastkennlinien dargestellt, die sich bei einem Zusatz von 0,1 Gew.-% Chinhydron ergeben. Aus der Tatsache, daß die ursprüngliche Kennlinie (Kurve 20) und die Kennlinie nach 10minütigem Gleichstrombetrieb (Kurve 21) nahezu identisch sind, ist die erzielte Stabilität zu erkennen.

Die Vorteile einer stabilen Kontrastkennlinie, die sich aufgrund der Ausschaltung der Polarisation und damit der Vermeidung von Reaktionen des Flüssigkristalls ergeben, sind insbesondere in folgendem zu sehen:

1. Beim Multiplexbetrieb muß die Ansteuerspannung mit einer definierten Stelle der Kontrastkennlinie übereinstimmen, es ist hierbei deshalb eine stabile Kennlinie erforderlich.

2. Eine vorhandene Polarisation kann zunächst auch nach dem Abschalten des Stromes bestehen bleiben und erst langsam abgebaut werden, wie dies beispielsweise bei der Konzentrationspolarisation der Fall ist. Diese Polarisation könnte beim Abschalten des Displays, d.h. beim Kurzschließen der beiden Elektroden, zu einer nicht erwünschten Ansteuerung führen.

3. Bei einer Reaktion des Flüssigkristalls können Produkte entstehen, die zu Orientierungsstörungen und zu einer Korrosion der Elektrode führen. Durch den Zusatz von EDA-Komplexen wird eine derartige Reaktion aber verhindert.

Es hat sich gezeigt, daß beispielsweise bei Displays mit p-Cyanophenylcyclohexan bei Gleichspannungsbetrieb (Spannung: 5 V) bereits nach 100 bis 200 Stunden eine braune Verfärbung eintritt. Verwendet man dagegen eine erfindungsgemäße Flüssigkristallanzeige, so läßt sich eine derartige Verfärbung, beispielsweise bereits bei einem Zusatz von 0,05 bis 0,2 Gew.-% Chinhydron, über sehr lange Zeiträume hinweg verhindern. Im übrigen beträgt bei den erfindungsgemäßen Anzeigen die Lebensdauer, die sonst bei ca. 1000 Stunden liegt, etwa 10 000 Stunden.

Wie bereits ausgeführt, müssen die in den erfindungsgemäßen Displays eingesetzten EDA-Komplexe die Bedingung erfüllen, daß ihre Oxidation und Reduktion in einem Potentialbereich erfolgt, der innerhalb des Potentialbereiches liegt, in welchem die Flüssigkristalle in entsprechender Weise elektrochemisch umgesetzt werden. Diese Bedingung wird auf verschiedene Weise erfüllt.

Da die Zusätze - bei einer vorgegebenen Überspannung - schneller reagieren müssen als die Flüssigkristalle, werden sie so gewählt, daß die Überspannung $\varepsilon - \varepsilon_o$ für das Redoxsystem günstiger liegt als für den Flüssigkristall. Dann gilt:

$$i = i_o \, \Theta \, \exp \, (\varepsilon - \varepsilon_o^Z) \cdot \alpha z F / RT$$

Dabei ist:
| | | |
|---|---|---|
| $i$ | = | Stromdichte bzw. Umsatzrate |
| $i_o$ | = | Austauschstromdichte |
| $\Theta$ | = | Bedeckungs- bzw. Belegungsgrad des Zusatzes auf der Elektrodenoberfläche |
| $\varepsilon$ | = | Elektrodenpotential |
| $\varepsilon_o^Z$ | = | Ruhepotential Elektrode/Zusatz |
| $\alpha$ | = | Durchtrittsfaktor |
| $z$ | = | Ladungsaustausch |
| $F$ | = | Faradaykonstante |
| $R$ | = | Gaskonstante |
| $T$ | = | Temperatur . |

0051768

Der vorstehend angegebenen Gleichung läßt sich folgendes entnehmen:

1. Da die Umsatzrate i von der Austauschstromdichte $i_o$ abhängig ist, wird man Zusätze verwenden, die elektrochemisch gut umgesetzt werden, d.h. mit hoher Geschwindigkeit reagieren; dann ist nämlich auch die Austauschstromdichte groß.

2. Für eine hohe Umsatzrate i ist ferner ein hoher Bedeckungsgrad $\Theta$ erforderlich, d.h. die Zusätze müssen an der Elektrode adsorbiert werden. Ein hoher Bedeckungsgrad des Zusatzes verhindert bzw. erschwert aber die elektrochemische Umsetzung der Flüssigkristalle, da für deren Umsetzung folgendes gilt:

$$i = i_o (1 - \Theta) \exp (\mathcal{E} - \mathcal{E}_o^{LC}) \cdot \alpha z F/RT,$$

wobei $\mathcal{E}_o^{LC}$ = Ruhepotential Elektrode/Flüssigkristall. Für die Auswahl der Zusätze gilt deshalb, daß sie an der Elektrode besser adsorbiert werden müssen, als die Flüssigkristalle selbst.

0051768
VPA 80 P 7 5 8 0 E

Patentansprüche

1. Feldeffekt-Flüssigkristallanzeige, d a d u r c h
g e k e n n z e i c h n e t , daß die Flüssigkristalle einen Zusatz von 0,01 bis 1 Gew.-% eines
nicht-ionogenen, oxidierbaren bzw. reduzierbaren Elektronen-Donor-Akzeptor-Komplexes aufweisen, dessen Oxidation und Reduktion in einem Potentialbereich erfolgt,
der innerhalb des Potentialbereiches für die Oxidation
und Reduktion des Flüssigkristalls liegt.

2. Feldeffekt-Flüssigkristallanzeige nach Anspruch 1,
d a d u r c h   g e k e n n z e i c h n e t ,   daß den
Flüssigkristallen Chinhydron zugesetzt ist.

3. Feldeffekt-Flüssigkristallanzeige nach Anspruch 1,
d a d u r c h   g e k e n n z e i c h n e t ,   daß den
Flüssigkristallen ein Gemisch aus einem aromatischen
Polyamin und einer aromatischen Polynitro- oder Polynitrilverbindung zugesetzt ist.

0051768
80 P 7580

FIG 1

FIG 2

Europäisches
Patentamt

**EUROPÄISCHER RECHERCHENBERICHT**

0051768

Nummer der Anmeldung

EP 81 10 8642

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | CHEMICAL ABSTRACTS, Band 90, 1979, Seite 607, Zusammenfassung 112982m, COLUMBUS, OHIO (US) J. ZIELINSKI et al.: "The effect of dynamic scattering in equimolar mixture of MBBA and EBBA doped with quinones and hydroquinones" " Electron Technol. 1978, 11(1-2), 93-101 * ganze Zusammenfassung * | 1,2 |
| X | APPLIED PHYSICS LETTERS, Band 24, Heft 5, 1. März 1974, American Institute of Physics, NEW YORK (US) Y. OHNISHI et al.: "Properties of nematic liquid crystals doped with hydroquinone and p-benzo-quinone: Long-term dynamic scatteringunder dc excitation", Seiten 213-216 * Seite 214 * & CHEMICAL ABSTRACTS, Band 80, 1974, Zusammenfassung 12602t | 1-3 |
| X | US - A - 3 975 285 (Y. ONISHI) * Spalte 2, Zeilen 18-59; Bei-spiele 1,2; Ansprüche 1,4,5,6 * | 1-3 |
| A | US - A - 3 814 700 (A. AVIRAM) * Spalte 2, Zeilen 50-60; Spalte 3, Zeilen 10-20; Ansprüche 1,2 * | 1,2 |

**KLASSIFIKATION DER ANMELDUNG (Int. Cl.³)**

C 09 K 3/34

**RECHERCHIERTE SACHGEBIETE (Int. Cl.³)**

C 09 K

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde lie-gende Theorien oder Grund-sätze
E: älteres Patentdokument. das jedoch erst am oder nach dem Anmeldedatum veröffentlicht worden ist
D: in der Anmeldung angeführtes Dokument
L: aus andern Gründen ange-führtes Dokument

&: Mitglied der gleichen Patent-familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 02.03.1982 | BOULON |

EPA form 1503.1  06.78